**Europäisches Patentamt**

**European Patent Office**

**Office européen des brevets**

(11) Veröffentlichungsnummer : **0 372 039 B1**

(12) **EUROPÄISCHE PATENTSCHRIFT**

(45) Veröffentlichungstag der Patentschrift :
26.08.92 Patentblatt 92/35

(21) Anmeldenummer : 89905612.1

(22) Anmeldetag : 02.06.89

(86) Internationale Anmeldenummer :
PCT/CH89/00105

(87) Internationale Veröffentlichungsnummer :
WO 89/12609 28.12.89 Gazette 89/30

(51) Int. Cl.⁵ : **C04B 18/10, B03B 9/04**

(54) **VERFAHREN UND VORRICHTUNG ZUR AUFBEREITUNG VON SCHLACKE AUS ABFALLVERBRENNUNGSÖFEN.**

(30) Priorität : **16.06.88 CH 2316/88**

(43) Veröffentlichungstag der Anmeldung :
**13.06.90 Patentblatt 90/24**

(45) Bekanntmachung des Hinweises auf die
Patenterteilung :
**26.08.92 Patentblatt 92/35**

(84) Benannte Vertragsstaaten :
**AT BE CH DE FR GB IT LI LU NL SE**

(56) Entgegenhaltungen :
**EP-A- 0 241 635**
**DE-A- 2 458 265**
**DE-C- 404 678**
**FR-A- 2 025 921**
**US-A- 1 758 496**

(73) Patentinhaber : **LEO SCHWYTER AG**
**Tösstalstrasse**
**CH-8486 Rikon im Tösstal (CH)**

(72) Erfinder : **SCHWYTER, Leo**
**Breitholz**
**CH-8370 Sirnach (CH)**

(74) Vertreter : **Bruderer, Werner**
**Patentanwaltskanzlei Oberhittnauerstrasse 12**
**CH-8330 Pfäffikon (CH)**

EP 0 372 039 B1

## Beschreibung

Die Erfindung betrifft ein Verfahren zur Aufbereitung von Schlacke aus Kehricht- und Abfallverbrennungsöfen, wobei nach dem Austritt aus dem Ofen unverbranntes Grobgut und magnetische Teile aus der Schlacke aussortiert werden, sowie eine Vorrichtung zur Durchführung des Verfahrens.

Die in Kehricht- und Abfallverbrennungsöfen anfallende Schlacke weist direkt nach dem Ofen Gehalte an Schadstoffen auf, welche deren weitere Verwendung, z.B. als Baustoff verhindern und auch die Ablagerung der Schlacke in Deponien zu einer Umweltgefährdung werden lässt. Der Gehalt an Schadstoffen ist abhängig von der Zusammensetzung des zur Verbrennung angelieferten Kehrichts bzw. Abfalles und auch von der Qualität des Verbrennungsprozesses. Im Durchschnitt dürfte sich der Schadstoffgehalt von Schlacken aus Hausmüllverbrennungsanlagen im Bereiche von ca. 50 bis 100 g pro kg Schlacke bewegen. Die in der Schlacke enthaltenen Schadstoffe sind dabei insbesondere Chlorid, Blei, Kadmium, Zink, Eisen, Kupfer und andere Verunreinigungen. Entsprechende Analysen sind beispielsweise in der Publikation Schweizer Ingenieur und Architekt, Heft 19, 1983, veröffentlicht. Bei der Ablagerung von Schlacken aus Abfallverbrennungsanlagen in Deponien müssen die Sickerwässer aufgefangen und entsorgt werden, da sie sonst eine erhebliche Gefährdung der Umwelt darstellen. Entsprechende Probleme treten auch bei der Verwendung von Schlacke im Strassenbau auf, weshalb die Schlacke in diesen Fällen sehr oft mit Zement vermischt und wasserundurchlässig gemacht wird. Da die zur Verfügung stehenden Deponien für Schlacke in immer geringerem Umfange zur Verfügung stehen, bereitet die Ablagerung der Schlacke grosse Probleme. Auch die Verwendung im Strassenbau ist durch den bisher hohen Schadstoffgehalt auf vereinzelte Anwendungsgebiete beschränkt.

Die Nachbehandlung von Schlacke aus Abfallverbrennungsprozessen ist bekannt. In der Zeitschrift Umweltmagazin, November 1985, Seiten 30 - 32, ist ein Prozess zur Minimierung der Schlackenmenge beschrieben. Bei diesem Verfahren ist unterhalb der Feuerung, d.h. am Ende des Feuerungsrostes ein sogenannter Nassentschlacker angeordnet, in welchem. die Schlacke abgekühlt wird. Es wird auch darauf hingewiesen, dass im Rahmen Cer Nassentschlackung eine Absenkung des Schwermetallgehaltes in der Schlacke erfolgt. Diese Absenkung des Schwermetallgehaltes ist jedoch ungenügend, und es verbleiben erhebliche Anteile von Schadstoffen in der Schlacke. Bei zu langer Verweildauer im Nassentschlacker zerfällt die Schlacke, und es ergeben sich zusätzliche Schwierigkeiten bei der Handhabung. Die Verwendung eines Nassentschlackers ist auch bei anderen Anlagen seit längerer Zeit bekannt, wobei dazu in vielen Fällen ein wassergefüllter Schlackenkanal dient. Von diesem wassergefüllten Schlackenkanal wird die abgekühlte Schlacke in einen Schlackenbunker ausgetragen und bis zur endgültigen Deponie gelagert. Infolge des hohen Wassergehaltes der Schlacke ergeben sich hohe Lager- und Transportgewichte und in der Folge hohe Entsorgungskosten.

In der Publikation: Stuttgarter Berichte zur Abfallwirtschaft, Berlin, 1984, S. 221 - 246, wird beschrieben, dass der Hauptanteil wasserlöslicher Schadstoffe im Flugstaub konzentriert ist, und von den Bundesämtern für Umweltschutz wird empfohlen, z.B. im Wegebau nur staubfreie Schlacke zu verwenden. In der Publikation DE 37 00 608 A1 wird ein Verfahren und eine Vorrichtung zur Schläckenaufbereitung beschrieben, bei welchem nach dem Abschrecken der Schlacke im Wasserbad Feinanteile mit einem Korn bis 1 mm aus der Schlacke entfernt werden. Die verbleibende Schlacke weist einen reduzierten Schadstoffgehalt auf und ist für den Strassen- und Wegebau einsetzbar. Die bekannten Verfahren zur Reinigung der Schlacke vermögen die steigenden Ansprüche an den minimalen Gehalt von Schadstoffen in der Schlacke noch nicht zu befriedigen. Die gereinigte Schlacke enthält weiterhin Restteile von wasserlöslichen Schadstoffen. Der Chloridgehalt kann z.B. immer noch bis 50 % des ursprünglichen Gehaltes betragen. Nachteilig ist auch der Umstand, dass die Schlacke nach dem Abschrecken im Wasserbad zwischengelagert werden muss und damit erhebliche Lagervolumen notwendig sind. Das anfallende Tropfwasser muss ebenfalls entsorgt werden, da es verschmutzt ist. Die Schadstoffe des Staubanteiles werden durch das Abschreckbad in die Schlacke geschwemmt und haften nach dem Trocknen in den Poren. Die vorgeschlagene Trocknung auf eine Restfeuchte von 1 % erfordert bei den grossen Mengen von Schlacke einen sehr hohen Energieaufwand. Die gereinigte Schlacke ist bei diesem hohen Trocknungsgrad als Baumaterial nicht geeignet und muss z.B. für den Wege- und Strassenbau wieder befeuchtet werden.

Es ist deshalb Aufgabe der vorliegenden Erfindung, ein Verfahren aufzuzeigen, mit welchem die in Abfallverbrennungsanlagen anfallende Schlacke von den darin enthaltenen löslichen Schadstoffen und Staubteilen gereinigt und so aufbereitet werden kann, dass sie ohne Gefährdung der Umwelt als Baustoff verwendet werden kann. Der Gehalt an Schadstoffen soll möglichst klein sein. Das Verfahren soll die Behandlung der Schlacke direkt nach dem Austritt aus der Verbrennungsanlage ohne Zwischenlagerung zulassen. Gleichzeitig soll der Aufwand für Energie sowie für Lagerung und Transport der Schlacke reduziert werden. Die Vorrichtung zur Durchführung dieses Verfahrens soll einfach aufgebaut sein und eine praktisch vollständige Entfeinung der Schadstoffe aus der Schlacke ermöglichen. Nach dem Durchlauf des Verfahrens und der Vorrichtung soll die Schlacke direkt der Verwendung als Baustoff zugeführt werden können.

Diese Aufgabe wird nach dem erfindungsgemässen Verfahren dadurch gelöst, dass die Schlacke vom Ofen direkt und ohne vorherige Abschreckung in einem Wasserbad der Grobreinigung zugeführt wird, die trockene und grob gereinigte Schlacke anschliessend in mindestens zwei Fraktionen getrennt wird und einer Fraktion alle Partikel, welche kleiner als 2 mm sind, zugewiesen werden.

Bei Anwendung dieses Verfahrens weist der Ofen für die Verbrennung von Kehricht und Abfall keine Nassentschlacker mit einem Wasserbad auf. Die Schlacke wird am Austritt des Verbrennungsraumes vom Ofen direkt und ohne vorherige Abschreckung in einem Wasserbad der Grobreinigung zugeführt. Zur Verhinderung des Luftzuges vom Austritt in den Feuerraum ist eine Luftsperre vorhanden, welche die Aufrechterhaltung der gewünschten Druckverhältnisse im Feuerraum ermöglicht. In vorteilhafter Weise werden unverbranntes Grobgut und magnetische Teile vor dem Fraktionieren aus der Schlacke entfernt. Das unverbrannte Grobgut und die magnetischen Teile belasten das Reinigungsverfahren, da sie einen Gewichtsanteil von 10 bis 20 % der am Ausgang des Ofens nach der Verbrennung im Ofen anfallenden Schlackenmenge ausmachen können. Es ist deshalb zweckmässig, diese Anteile im Schlackengut so früh als möglich, insbesondere vor der Anwendung zusätzlicher Arbeitsschritte, aus der behandelten Schlackenmasse zu entfernen. Da die Schlacke trocken ist, kann diese nun direkt in Fraktionen getrennt werden. In der Fraktion, welche alle Partikel, welche kleiner als 2 mm sind, enthält, sind bis 90 % der in der Rohschlacke enthaltenen Schadstoffe angesammelt. Nach Entfernung dieser Fraktion aus der Schlacke kann die verbleibende gereinigte Schlacke ohne Gefährdung für die Umwelt weiterverwendet werden. Die in der gereinigten Schlacke noch vorhandenen Schadstoffe sind praktisch vollständig in die Körner eingebunden und nicht mehr wasserlöslich. Da bei diesem Verfahren kein Wasser zum Abschrecken der Schlacke notwendig ist, ergibt sich erstens der Vorteil, dass kein verunreinigtes Abschreckwasser anfällt, und zweitens der weitere Vorteil, dass die Schlacke nicht getrocknet werden muss, was zu einer erheblichen Einsparung an Fremdenergie führt.

Eine bevorzugte Ausführungsform des erfindungsgemässen Verfahrens ist dadurch gekennzeichnet, dass die Schlacke vor der Fraktionierung auf eine Korngrösse von maximal 100 mm zerkleinert wird. Diese Korngrösse erweist sich als zweckmässig für die Durchführung des Fraktionierverfahrens und auch für die Weiterverwendung der diesem Behandlungsverfahren unterworfenen Schlacke. Während der Zerkleinerung und im anschliessenden Fraktionierverfahren werden die Schlackenteile mechanisch beansprucht, so dass oberflächlich anhaftende Kleinteile losgelöst werden. Diese lassen sich nun ebenfalls ausscheiden.

Im weiteren besteht eine bevorzugte Ausführungsform darin, dass die Fraktion mit dem Korn grösser als 2 mm nach dem Fraktionieren mit Wasser befeuchtet wird. Die Anwendung dieses Verfahrensschrittes ermöglicht, die Schlacke so zu konditionieren, dass sie einen für die nachfolgende Verwendung geeigneten Feuchtigkeitsgehalt aufweist. Bei Verwendung der gereinigten Schlacke im Strassen- und Wegebau soll dieser Feuchtigkeitsgehalt ca. 10 bis 15 % betragen. In einfacher Weise kann das Verfahren weiter verbessert werden, indem der Fraktion mit Partikeln grösser als 2 mm nach dem Fraktionieren Zuschlagstoffe und/oder Bindemittel beigemengt werden.

In vorteilhafter Weise wird die Restwärme der Schlacke von einem Luftstrom aufgenommen und die erwärmte Luft dem Verbrennungsprozess im Ofen oder einem Wärmetauscher zugeführt. Da die Schlacke beim Austritt aus dem Verbrennungsraum des Ofens noch nicht vollständig abgekühlt ist, kann die in der Schlacke gespeicherte Restwärme genutzt werden. Ein durch die Schlacke geführter Luftstrom ist ein geeigneter Wärmeträger, da diese erwärmte Luft für eine Verbesserung des Verbrennungsprozesses im Ofen genutzt oder in einem Wärmetauscher Energie an andere Wärmeverbraucher abgeben kann. Gleichzeitig nimmt der durch die Schlacke geführte Luftstrom leichte Partikel und Staub mit und bildet damit eine Reinigungsstufe des Verfahrens. Diese Leichtpartikel und der Staub werden aus dem Luftstrom ausgefiltert und wegen des hohen Schadstoffgehaltes als Sondermüll behandelt.

Eine weitere Verbesserung des Verfahrens lässt sich dadurch erreichen, dass die Schlackenfraktion mit einem Korn grösser als 2 mm nach dem Fraktionieren gewaschen und anschliessend das Waschwasser von der Schlacke abgetrennt wird. Dieser zusätzliche Verfahrensschritt ist insbesondere angezeigt, wenn die Schlacke wegen einer schlechten Zusammensetzung des Kehrichts bzw. Abfalles einen vom Normalgehalt abweichenden sehr hohen Gehalt an Schadstoffen aufweist. In solchen Fällen kann die Schlacke mit dem Korn grösser als 2 mm nach der Fraktionierung noch einen Schadstoffgehalt aufweisen, welcher die Umwelt gefährden könnte oder über den für die Verwendung als Baustoff zulässigen Werten liegt. Durch den Waschprozess werden oberflächlich an der Schlacke haftende Schadstoffteile abgewaschen, und die verbleibenden Schadstoffe sind dann in die Schlacke eingebunden, so dass eine Auswaschung bei der anschliessenden Verwendung nicht mehr möglich ist. Dadurch lassen sich auch extrem stark verunreinigte Schlacken in der gewünschten Weise reinigen.

Die Vorrichtung zur Durchführung des erfindungsgemässen Verfahrens ist dadurch gekennzeichnet, dass direkt nach dem Schlackenaustritt aus dem Ofen eine wärmebeständige Transporteinrichtung, eine Vorrichtung zum Abscheiden von unverbranntem Grobgut, die bevorzugt eine Ruttelrinne oder ein Sieb ist, und ein Magnetabscheider angeordnet sind und nachfolgend eine Fraktioniereinheit mit einem Klassiersieb von maximal 2 mm nachgeordnet ist. In der Fraktioniereinheit werden die Schlackenteile mechanisch so beansprucht, dass oberflächlich anhaftende Kleinteile losgelöst und ebenfalls ausgeschieden werden. Die Vorrichtung kann direkt an den Verbrennungsofen anschliessen und ermöglicht damit eine kontinuierliche Behandlung der aus dem Ofen austretenden Schlacke. Die nach der Vorrichtung anfallende aufbereitete Schlacke ist für die direkte Verwendung als Baustoff oder Ablagerung in Deponien geeignet und kann deshalb direkt weggeführt werden. Dadurch entfällt die aufwendige Zwischenlagerung und, da die Schlacke in keinem Verfahrensschritt benetzt wird, muss auch keine Energie für die Trocknung der Schlacke eingesetzt werden. Eine weitere Verbesserung der Vorrichtung lässt sich dadurch erreichen, dass zwischen dem Schlackenaustritt des Ofens und der Transporteinrichtung eine Sperreinrichtung gegen Luftströmungen angeordnet ist. Diese Sperreinrichtung verhindert den Austritt von Verbrennungsgasen aus dem Ofen oder den Eintritt von Luft in den Ofen über den Schlackenaustritt und verhindert die Beeinflussung des Verbrennungsvorganges. In vorteilhafter Weise wird die Fraktioniereinheit von einem Luftstrom durchströmt. Dieser Luftstrom unterstützt die Abtrennung der Fraktion mit Partikeln, welche kleiner als 2 mm sind, da Leichtteile und Staub von diesem Luftstrom mitgerissen werden. Diese Kleinpartikel können dann in einfacher und bekannter Weise vom Luftstrom abgetrennt und kontrolliert gelagert werden.

Eine bevorzugte Ausführungsform besteht darin, dass vor der Fraktioniereinheit ein Brecher für Schlakkenteile grösser als 100 mm angeordnet ist. Dieser Brecher trennt allfällige grosse Schlackenstücke in Teile kleiner als 100 mm auf, welche in der anschliessenden Fraktioniereinheit besser bearbeitet werden können. Die mechanische Beanspruchung der Oberfläche der Schlackenteile löst anhaftende Kleinteile und reibt auch Oberflächenteile ab. Dies während der Zerkleinerung und der anschliessenden Fraktionierung. Nach der Fraktioniereinheit ist ein Trommelmischer mit Dosiereinrichtungen für Zuschlagstoffe angeordnet. Diese Einrichtung stellt eine weitere Verbesserung dar, indem die gereinigte Schlacke mit Zuschlagstoff wie z.B. Wasser oder Bindemittel auf die nachfolgende Verwendung konditioniert wird.

Gegenstand der vorliegenden Erfindung ist ausserdem eine Verwendung der erfindungsgemäss gereinigten Schlacke als Baumaterial. Dieses Baumaterial kann im Strassen- und Wegebau, für Lärmdämmwände oder andere Bauwerke verwendet werden.

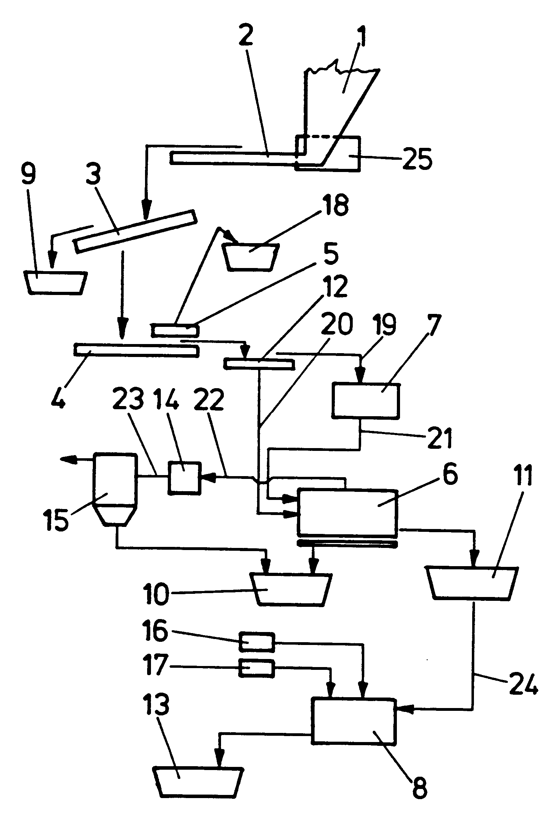

Im folgenden wird die Erfindung anhand eines Ausführungsbeispieles unter Bezugnahme auf die beiliegende Zeichnung, welche die schematische Darstellung einer aus einzelnen Baugruppen zusammengestellten Schlackenaufbereitungsvorrichtung zeigt, näher erläutert.

Am Ende einer Verbrennungsanlage für Hausmüll befindet sich ein Schlackenaustritt 1. Dieser Schlackenaustritt 1 ist mit einer Sperreinrichtung 25 versehen, welche den Gasdurchgang von z.B. Verbrennungsgasen oder Luft verhindert. Im dargestellten Beispiel findet eine Zellenschleuse Verwendung. An den Schlackenaustritt 1 schliesst eine Transporteinrichtung 2 an, welche die aus dem Ofen austretende Schlacke zu einem Abscheider 3 fürt. Die Transporteinrichtung 2 ist dabei zweckmässigerweise wärmebeständig ausgebildet, da sich in der Schlacke noch glühende Metallteile befinden können, oder unverbrannte Abfallteile sich erneut entzünden können. Im Abscheider 3 wird die aufgebrachte Schlacke von grösseren unverbrannten Teilen und von Grobgut gereinigt, indem dieser Abscheider 3 nur Teile von einer bestimmten Maximalgrösse durchlässt. Das abgeschiedene Grobgut fällt in eine Sammelmulde 9 und wird von hier der Wiederverarbeitung oder geordneten Deponie zugeführt. Die im Abscheider 3 vom Grobgut gereinigte Schlacke gelangt auf eine Fördereinrichtung 4, welche mit einem Magnetabscheider 5 versehen ist. Mittels dieses Magnetabscheiders 5 wird aus der Schlacke alles magnetische Material, d.h. die Eisenbestandteile, entfernt und in einer Sammelmulde 18 zur Wiederverwendung zwischengelagert. Erfahrungsgemäss wird mittels des Abscheïders 3 und des Magnetabscheiders 5 ca. 10 bis 20 % des Gewichtes aus der am Schlackenaustritt 1 anfallenden Schlacke entfernt. Diese Teilmenge kann zum grössten Teil wieder verwertet werden.

Nach dem Magnetabscheider 5 gelangt die Schlacke von der Fördereinrichtung 4 auf ein Trennsieb 12. Dieses Trennsieb 12 ist so bemessen, dass alle Schlackenteile, welche grösser als 100 mm sind, aufgehalten und in Richtung des Weges 19 in einen Brecher 7 gefördert werden. In diesem handelsüblichen Brecher 7 werden grosse Schlackenteile zerkleinert und auf eine Korngrösse gebracht, welche für die weitere Behandlung und die spätere Verwendung geeignet ist. Der Brecher 7 und das Trennsieb 12 sind nur in Anlagen vorhanden, bei welchen die Schlackenteile für die Bearbeitung und die spätere Verwendung zu gross sind. Andernfalls kann dieser Anlagenteil weggelassen werden. Alle Schlackenteile, welche die gewünschte Grösse haben, werden nun entlang der Transportwege 20, 21 in eine Fraktioniereinheit 6 gefördert. Im dargestellten Beispiel besteht die Fraktioniereinheit 6 aus einer Drehtrommel mit einem Trennsieb. Auch hier handelt es sich um eine im Kies- und Sandbearbeitungsbereich bekannte Vorrichtung. Dieser Brecher 6 ermöglicht eine gegenseitige mechanische Beanspruchung der Oberflächen der Schlackenteile, so dass lose Oberflächenteile und anhaftende Kleinteile abgetrennt werden. Das Trennsieb ist so ausgebildet, dass Staub und alle Schlackenteile, welche eine Korngrösse von kleiner als 2 mm aufweisen, aus der Schlacke abgeschieden werden. Diese Feinanteilfraktion wird in der Fraktioniereinheit 6 vom Schlackenstrom abgetrennt und in eine Sammelmulde 10 gefördert. Die in der Sammelmulde 10 anfallende Fraktion mit Partikeln bzw. Körnern, welche kleiner als 2 mm sind, enthält den grössten Teil der ursprünglich in der Schlacke beim Schlackenaustritt 1 enthaltenen Schadstoffe. Diese Fraktion enthält z.B. ca. 75 % des Bleis oder ca. 80 % des Kadmiums und bis 90 % der Chloride. Aufgrund des hohen Schadstoffgehaltes kann diese Feinteilfraktion nur im Rahmen von Sonderbehandlungen weiter verwendet und deponiert werden. Die in der Sammelmulde 10 anfallende Fraktion ist jedoch trocken und kann somit einfach und in üblicher Weise gehandhabt werden.

Die in der Figur dargestellte Fraktioniereinheit 6 ist im weiteren mit einer Absaugvorrichtung 14 versehen, mittels welcher ein Luftstrom durch die Schlacke und die Fraktioniereinheit gesogen wird. Mit Hilfe dieses Luftstromes werden feine Staubanteile und leichte Kleinteile aus der Schlacke ausgespült und über Leitungen 22, 23 einem Staubund Schwebeteilabscheider 15 zugeführt. In diesem Staubabscheider 15 wird der Luftstrom gereinigt, und die anfallenden Staub- und Schwebeteile werden ebenfalls in die Sammelmulde 10 abgelagert. Auch die in diesem Abscheider 15 anfallenden Staub- und Feinteile weisen einen sehr hohen Schadstoffgehalt auf. Die Kombination der Fraktioniereinheit 6 mit der Absaugvorrichtung 14 ermöglicht einen sehr hohen Reinigungsgrad der Schlacke, und es können der Schlacke bis 90 % der ursprünglich vorhandenen Schadstoffe entzogen werden. Die aus der Fraktioniereinheit 6 austretende gereinigte Schlacke weist Schadstoffanteile auf, welche sehr gering sind. Diese Anteile liegen unterhalb der von den Umweltschutzgesetzen geforderten Grenzwerte, und die noch vorhandenen Schadstoffe sind zudem in die Schlacke eingebunden und deshalb nicht mehr frei löslich und auswaschbar. Es kann deshalb davon ausgegangen werden, dass die nach diesem Verfahren aufbereitete und gereinigte Schlacke ohne Gefährdung für die Umwelt als Baumaterial verwendet werden kann.

Die gereinigte Schlacke wird nach dem Verlassen der Fraktioniereinheit 6 in einen Transportbehälter oder Bunker 11 gebracht. Sofern die gereinigte Schlacke nach der Fraktioniereinheit 6 die gewünschte Struktur aufweist, kann sie direkt zur weiteren Verwendung abtransportiert werden. Da sie trocken ist, müssen sowohl bei der Lagerung wie beim Transport keine Massnahmen zum Auffangen von allfälligem Tropfwasser getroffen werden. Werden bei der Verwendung der Schlacke bestimmte Anforderungen an diese gestellt, so wird die gereinigte Schlacke nach der Fraktioniereinheit 6 in Richtung des Transportweges 24 in einen Trommelmischer 8 eingebracht. Dieser Trommelmischer 8 ist mit Dosiereinrichtungen 16 und 17 versehen, wobei die Dosiereinrichtung 16 der Beimischung von Wasser und die Dosiereinrichtung 17 der Beimischung von anderen Zuschlägen, wie beispielsweise Zement, Sand und andere, bestimmt sind. Für die Verwendung als Baumaterial im Strassen- und Wegebau muss die gereinigte Schlacke einen Feuchtigkeitsgehalt von ca. 10 bis 15 % Wasser aufweisen, damit sie wunschgemäss eingebracht und verdichtet werden kann. Sofern die Schlacke beim Austritt aus der Fraktioniereinheit 6 diesen Feuchtigkeitsgehalt noch nicht aufweist, wird das fehlende Wasser im Trommelmischer 8 mittels der Dosiereinrichtung 16 beigemischt. Nach dem Trommelmischer 8 gelangt die nun wunschgemäss konditionierte Schlacke in einen Transport- oder Lagerbehälter 13. Bei Schlacken, welche infolge von einer ungeeigneten Zusammensetzung des Abfalles einen unäblich hohen Schadstoffgehalt aufweisen, wird der Trommelmischer 8 als - Wascheinheit eingesetzt, um oberflächlich noch an der Schlacke anhaftende Schadstoffe auszuspülen. Der Trommelmischer 8 weist dann noch weitere, nicht dargestellte Einrichtungen für die Handhabung des Waschwassers auf.

## Patentansprüche

1. Verfahren zur Aufbereitung von Schlacke aus Kehricht- und Abfallverbrennungsöfen, wobei nach dem Austritt aus dem Ofen unverbranntes Grobgut und magnetische Teile aus der Schlacke aussortiert werden, dadurch gekennzeichnet, dass die Schlacke vom Ofen direkt und ohne vorherige Abschreckung in einem Wasserbad der Grobreinigung zugeführt wird, die trockene und grob gereinigte Schlacke anschliessend in mindestens zwei Fraktionen getrennt wird und einer Fraktion alle Partikel, welche kleiner als 2 mm sind, zugewiesen werden.

2. Verfahren zur Aufbereitung von Schlacke nach Patentanspruch 1, dadurch gekennzeichnet, dass die Schlacke vor der Fraktionierung auf eine Korngrösse von maximal 100 mm zerkleinert und während des Fraktionierens mechanisch beansprucht wird.

3. Verfahren zur Aufbereitung von Schlacke nach Patentanspruch 1 oder 2, dadurch gekennzeichnet, dass die Fraktion mit dem Korn grösser als 2 mm nach dem Fraktionieren mit Wasser befeuchtet wird.

4. Verfahren zur Aufbereitung von Schlacke nach einem der Patentansprüche 1 bis 3, dadurch gekennzeichnet, dass der Fraktion mit dem Korn grösser als 2 mm nach dem Fraktionieren Zuschlagsstoffe und/oder Bindemittel beigemengt werden.

5. Verfahren zur Aufbereitung von Schlacke nach Patentanspruch 1, dadurch gekennzeichnet, dass die Restwärme der Schlacke von einem Luftstrom aufgenommen und die erwärmte Luft dem Verbrennungsprozess im Ofen oder einem Wärmetauscher zugeführt wird.

6. Verfahren zur Aufbereitung von Schlacke nach Patentanspruch 1 oder 2, dadurch gekennzeichnet, dass die Schlackenfraktion mit einem Korn grösser als 2 mm nach dem Fraktionieren gewaschen und anschliessend das Waschwasser von der Schlacke abgetrennt wird.

7. Vorrichtung zur Durchführung der Verfahrens gemäss Patentanspruch 1, dadurch gekennzeichnet, dass direkt nach dem Schlackenaustritt (1) aus dem Ofen eine wärmebeständige Transporteinrichtung (2), eine Vorrichtung (3) zum Abscheiden von unverbranntem Grobgut und ein Magnetabscheider (5) angeordnet sind, und nachfolgend eine Fraktioniereinheit (6) mit einem Klassiersieb von maximal 2 mm nachgeordnet ist.

8. Vorrichtung nach Patentanspruch 7, dadurch gekennzeichnet, dass zwischen dem Schlackenaustritt (1) und der Transporteinrichtung (2) eine Sperreinrichtung (25) gegen Luftströmungen angeordnet ist.

9. Vorrichtung nach Patentanspruch 7 oder 8, dadurch gekennzeichnet, dass die Fraktioniereinheit (6) von einem Luftstrom durchströmt ist.

10. Vorrichtung nach einem der Patentansprüche 7 bis 9, dadurch gekennzeichnet, dass vor der Fraktioniereinheit (6) ein Brecher (7) für Schlackenteile grösser als 100 mm angeordnet ist.

11. Vorrichtung nach einem der Patentansprüche 7 bis 10, dadurch gekennzeichnet, dass nach der Fraktioniereinheit (6) ein Trommelmischer (8) mit Dosiereinrichtungen (16, 17) für Zuschlagsstoffe angeordnet ist.

12. Vorrichtung nach einem der Patentansprüche 7 bis 11, dadurch gekennzeichnet, dass die Vorrichtung (3) zum bescheiden von Grobgut eine Rüttelrinne oder ein Sieb ist.

## Claims

1. A process for processing slag from incinerators for sweepings and refuse in which, after the furnace exit, unburnt coarse material and magnetic constituents are sorted out from the slag, characterized in that the slag is fed from the furnace, directly and without preceding quenching in a water bath, to rough cleaning, the dry and roughly cleaned slag is then separated into at least two fractions, and all particles smaller than 2 mm are allocated to one fraction.

2. A process for processing slag according to Claim 1, characterized in that the slag is continuted to a particle size not exceeding 100 mm before the fractionation and mechanically stressed during the fractionation.

3. A process for processing slag according to Claim 1 or 2, characterized in that the fraction with particle size exceeding 2 mm is moistened with water after the fractionation.

4. A process for processing slag according to one of Claims 1 to 3, characterized in that additives and/or binders are admixed to the fraction with particle size exceeding 2 mm after the fractionation.

5. A process for processing slag according to Claim 1, characterized in that the residual heat of the slag is absorbed by an air stream and the heated air fed to the combustion process in the furnace or to a heat exchanger.

6. A process for processing slag according to Claim 1 or 2, characterized in that after the fractionation, the slag fraction with particle size exceeding 2 mm is washed and subsequently the wash water is separated from the slag.

7. An apparatus for carrying out the process according to Claim 1, characterized in that directly after the slag exit (1) from the furnace there are arranged a heat-resistant transport installation (2), a device (3) for separating unburnt coarse material and a magnetic separator (5), and subsequently a fractionation unit (6) with a classifying screen for a maximum of 2 mm.

8. An apparatus according to Claim 7, characterized in that a barrier device (25) against air flows is arranged between the slag exit (1) and the transport installation (2).

9. An apparatus according to Claim 7 or 8, characterized in that an air stream flows through the fractionation unit (6).

10. An apparatus according to one of Claims 7 to 9, characterized in that a crusher (7) for slag pieces exceeding 100 mm is arranged before the fractionation unit (6).

11. An apparatus according to one of Claims 7 to 10, characterized in that a drum mixer (8) with dosing mechanisms (16, 17) for additives is arranged after the fractionation unit (6).

12. An apparatus according to one of Claims 7 to 11, characterized in that the device (3) for separating coarse material is a vibrating chute or a sieve.

**Revendications**

1. Procédé de traitement de scories de fours d'incinération d'immondices et de déchets, dans lequel, après la sortie du four, la matière grossière non brûlée et des particules magnétiques sont séparées des scories par triage, caractérisé en ce que les scories sont amenées à l'épuration grossière directement à partir du four et sans refroidissement brusque préalable dans un bain aqueux, en ce que les scories sèches et grossièrement épurées sont ensuite séparées en au moins deux fractions et en ce que toutes les particules, qui sont plus petites que 2 mm, sont attribuées à une fraction.

2. Procédé de traitement des scories suivant la revendication 1, caractérisé en ce que les scories sont, avant le fractionnement, fragmentées à une grandeur de grain de 100 mm au maximum et en ce qu'elles sont sollicitées mécaniquement pendant le fractionnement.

3. Procédé de traitement de scories suivant l'une des revendications 1 et 2, caractérisé en ce que la fraction ayant un grain plus grand que 2 mm est humidifiée par de l'eau après le fractionnement.

4. Procédé de traitement de scories suivant l'une des revendications 1 à 3, caractérisé en ce que des additifs et/ou des liants sont mélangés à la fraction ayant un grain plus grand que 2 mm, après le fractionnement.

5. Procédé de traitement de scories suivant la revendication 1, caractérisé en ce que la chaleur résiduaire des scories est absorbée par un courant d'air et en ce que l'air chauffé est amené au processus de combustion dans le four ou à un échangeur de chaleur.

6. Procédé de traitement de scories suivant l'une des revendications 1 et 2, caractérisé en ce que la fraction de scories ayant un grain plus grand que 2 mm est lavée après le fractionnement et en ce qu'ensuite l'eau de lavage est isolée des scories.

7. Dispositif pour la mise en oeuvre du procédé suivant la revendication 1, caractérisé en ce qu'un dispositif de transport résistant à la chaleur (2), un dispositif (3) pour séparer la matière grossière non brûlée et un séparateur magnétique (5) sont agencés directement en aval de la sortie des scories (1) du four et en ce qu'ensuite une unité de fractionnement (6) est agencée en aval avec un crible de classement d'au maximum 2 mm.

8. Dispositif suivant la revendication 7, caractérisé en ce qu'un dispositif de blocage (25) vis-à-vis des courants d'air est agencé entre la sortie des scories (1) et le dispositif de transport (2).

9. Dispositif suivant l'une des revendications 7 et 8, caractérisé en ce que l'unité de fractionnement (6) est traversée par un courant d'air.

10. Dispositif suivant l'une des revendications 7 à 9, caractérisé en ce qu'un broyeur (7) pour les particules de scories plus grandes que 100 mm est agencé en amont de l'unité de fractionnement (6).

11. Dispositif suivant l'une des revendications 7 à 10, caractérisé en ce qu'un mélangeur à tambour (8) muni de dispositifs de dosage (16, 17) pour des additifs est agencé après l'unité de fractionnement (6).

12. Dispositif suivant l'une des revendications 7 à 11, caractérisé en ce que le dispositif (3) destiné à séparer la matière grossière est une rigole à secousses ou un crible.